# EUROPÄISCHE PATENTSCHRIFT

(11) **EP 2 118 974 B1**
(45) Veröffentlichungstag und Bekanntmachung des Hinweises auf die Patenterteilung: **15.07.2015**
(21) Anmeldenummer: 07711187.0
(22) Anmeldetag: 13.02.2007
(51) Int. Cl.: H02B 13/025, H02B 1/56

(54) **ELEKTRISCHE ANLAGE MIT EINEM CONTAINER**
ELECTRICAL INSTALLATION WITH A CONTAINER
DISPOSITIF ÉLECTRIQUE COMPORTANT UN CONTENANT

(43) Veröffentlichungstag der Anmeldung: 18.11.2009
(73) Patentinhaber: Siemens Aktiengesellschaft, 80333 München (DE)
(72) Erfinder: PEREIRA, Marcos, 91056 Erlangen (DE); ZENKNER, Andreas, 90587 Obermichelbach (DE)
(86) Internationale Anmeldenummer: PCT/DE2007/000277
(87) Internationale Veröffentlichungsnummer: WO 2008/098530

(56) Entgegenhaltungen:
- EP-A- 0 268 137
- DE-A1- 3 611 539
- DE-U1- 9 016 540
- US-B1- 6 233 137

## Beschreibung

Die Erfindung betrifft eine elektrische Anlage mit einem Container

Elektrischen Anlagen dieser Art sind beispielsweise aus der WO 2006/111484 A1 bereits bekannt geworden. Dort ist eine elektrische Anlage mit einem Container offenbart, in dem Komponenten einer Mittelspannungsschaltanlage angeordnet sind. Dabei ist der Container in unmittelbarer Nähe eines Generators eines Kraftwerks aufgestellt, wobei der Generatorcontainer zwischen den Generator und einen Umspanntransformator geschaltet ist, der die vom Generator erzeugte Mittelspannung auf eine Hochspannung transformiert. Zum Betätigen der Hochspannungskomponenten sind in der Außenwandung des Containers Bedienöffnungen vorgesehen, durch die ein Benutzer im Bedarfsfall notwendige Schritte an den Mittelspannungsbauteilen beispielsweise zu Wartungszwecken einleiten kann.

In der DE 43 41 511 A1 ist eine elektrische Anlage mit einem Container beschrieben, wobei eine Schutzabtrennung einen Bedienraum von einem Raum mit Mittelspannungsbauteilen abtrennt. Ferner ist eine Klimaeinrichtung auf dem Dach des Containers angeordnet, mittels derer im Innenraum des Containers die notwendige Betriebstemperatur bereitgestellt wird.

Aus der DE 90 16 540 ist ein begehbarer Container mit Hochspannungsbauteilen zur Blindleistungskompensation bekannt. Die Hochspannungskomponenten umfassen eine Drossel sowie eine Kondensatorbatterie, wobei ein Schalter zum Anschluss eines Versorgungsnetzes vorgesehen ist. Zur Verbindung des Versorgungsnetzes mit den Mittelspannungskomponenten dienen Durchführungen, die in der Wandung des Containers angeordnet sind. Ferner ist eine Steuerungseinrichtung vorgesehen. Zur Kühlung des Innenraums des Containers ist eine Klimaanlage auf dem Dach des Containers angeordnet.

Aus der Offenlegungsschrift DE 36 11 539 A1 ist ein schallgedämmtes Stationsgebäude bekannt, in dem Verbrennungsmotor-Generator-Aggregate eines Kleinkraftwerkes installiert sind. Das Stationsgebäude weist eine mit Schalldämpfungskulissen ausgekleidete Kammer für die Zuluft und eine solche Kammer für die Abluft auf, um eine Belüftung des Innenraums zu ermöglichen.

Die elektrischen Anlagen gemäß dem Stand der Technik sind für weitestgehend passiv arbeitende elektrische Komponenten im Bereich der Mittelspannungstechnik ausgelegt. Bei diesen Komponenten kommt der Steuerung nur in Ausnahmefällen, beispielsweise zu Wartungszwecken, eine größere Rolle zu. Auch ist die elektrische Auslegung der Hochspannungskomponenten so bemessen, dass eine Luftkühlung beim Betrieb der elektrischen Anlage ausreichend ist, um die erforderliche Betriebstemperatur sicher zu stellen. Die Luftkühlung wird durch eine auf dem Dach des Containers angeordnete Klima- oder Kühleinrichtung bereitgestellt. Insbesondere bei aktiv wirkenden elektrischen Anlagen kommt der Steuerung der aktiven Bauteile jedoch eine immer größer werdende Bedeutung zu. Darüber hinaus können sich bei höheren Betriebsleistungen Hochspannungsbauteile so erwärmen, dass eine Luftkühlung mit Hilfe einer Klimaanlage nicht mehr ausreichend ist.

Aufgabe der Erfindung ist es daher, eine elektrische Anlage mit einem Container bereitzustellen, die auch bei Bestückung mit aktiven Komponenten kostengünstig und schnell montierbar ist, wobei gleichzeitig eine ausreichende Kühlung von Hochspannungsbauteilen ermöglich ist.

Die Erfindung löst diese Aufgabe durch eine elektrische Anlage mit einem Container, der Hochspannungsbauteile umschließt, wobei im Innenraum des Containers ein Bedienraum mit Steuer- und Anzeigenelementen der elektrischen Anlage und ein Kühlraum mit einer Kühleinrichtung für wenigstens eines der Hochspannungsbauteile angeordnet sind.

Erfindungsgemäß ist ein Bedienraum vorgesehen, in dem alle Daten- und Steuerungsleitungen der Hochspannungsbauteile zusammenlaufen. Der Container kann daher mit seinem Steuerungsraum so ausgelegt werden, dass eine variable Anzahl von Hochspannungsbauteilen, an die Steuerung angeschlossen werden kann. Auf diese Weise ist eine nahezu identische Bauform von unterschiedlich dimensionierten elektrischen Anlagen ermöglicht. Darüber hinaus ist erfindungsgemäß auch eine leistungsfähige Kühlung von Hochspannungsbauteilen bereitgestellt, wobei die Kühlung in einem eigenen Kühlraum angeordnet ist. In dem Kühlraum ist zweckmäßigerweise eine ausreichend dimensionierte Kühlanlage aufgestellt. Die elektrische Anlage kann daher bereits vor Auslieferung an einen Kunden ausführlich getestet werden, wobei Anpassungsschwierigkeiten an eine externe Kühlung verhindert sind. Darüber hinaus ist auch die Anordnung von Bauteilen außerhalb des Containers vermieden, die während des Betriebs einer hohen Erwärmung ausgesetzt sind. Somit ist eine kompakte elektrische Anlage bereitgestellt, die einfach montierbar ist. Außerhalb des Containers angeordnete Hochspannungsbauteile sind erfindungsgemäß vermieden. Somit kann die elektrische Anlage gemäß der vorliegenden Erfindung auch in bewohnten Gebieten aufgestellt werden. Darüber hinaus ermöglicht das Einrichten eines Bedienraums und eines Kühlraums die abgetrennte und elektrisch sichere Anordnung der Bauteile zur Steuerung beziehungsweise zur Kühlung gegenüber den Hochspannungsbauteilen. Somit ist ein Bedienen der Steuerungs- und Kühlbauteile auch während des Betriebs der elektrischen Anlage ermöglicht.

Der Bedienraum weist einen verschließbaren Zugang von außerhalb des Containers auf. Gemäß dieser vorteilhaften Weiterentwicklung ist es möglich, dem Bedienpersonal einen separaten Zugang für die Steuerung der Hochspannungsbauteile zu gewähren, wobei jedoch der Zugang zu den Hochspannungsbauteilen beispielsweise nur geschultem Wartungspersonal ermöglicht wird.

Zweckmäßigerweise weist der Kühlraum einen verschließbaren Zugang von außerhalb des Containers auf. Gemäß dieser vorteilhaften Weiterentwicklung kann auch dem Wartungspersonal der Kühleinrichtung ein eigener Zugang zur Kühleinrichtung gewährt werden, wobei der Zugang zu den Hochspannungsbauteilen zu deren Wartung anderen Fachkräften vorbehalten ist.

Zweckmäßigerweise ist ein Hochspannungsraum innerhalb des Containers vorgesehen, der Hochspannungsbauteile enthält.

Zweckmäßigerweise weist der Hochspannungsraum wenigstens einen verschließbaren Zugang von außerhalb des Containers auf. Dies ermöglicht, wie bereits ausgeführt wurde, den selektierten Zugang zu den Hochspannungsbauteilen.

Zweckmäßigerweise ist die Wandung des Containers wenigstens teilweise schallgedämmt. Gemäß dieser vorteilhaften Weiterentwicklung ist auch die Anordnung von lärmintensiven Hochspannungsbauteilen innerhalb des Containers möglich, ohne dass beispielsweise in Wohngebieten eine Lärmbelästigung für die umgebende Bevölkerung verursacht wird.

Vorteilhafterweise verfügt die Wandung des Containers zumindest teilweise über eine Wärmeisolierung oder eine Isolierung gegenüber elektromagnetischer Strahlung.

Gemäß einer diesbezüglichen zweckmäßigen Weiterentwicklung ist die Wandung des Containers wenigstens teilweise doppelwandig ausgebildet. Durch die doppelwandige Ausbildung ist ein noch effektiverer Lärmschutz bereitgestellt.

Gemäß einer diesbezüglich zweckmäßigen Weiterentwicklung weist die doppelwandig ausgebildete Wand wenigstens in Teilbereichen eine Schalldämmschicht auf. Diese Schalldämmschicht stellt einen besonders vorteilhaften Lärmschutz bereit.

Innerhalb des Containers ist eine Drosselspule angeordnet, wobei diese Drosselspule beispielsweise wassergekühlt ist. Bei einigen Anwendungen erwärmen sich Drosselspulen derart, dass diese nicht mehr allein von Luft gekühlt werden können oder zu viel Wärme in Raum auf diese Weise ableiten würden. Stattdessen ist eine Wasserkühlung notwendig. Die entsprechende Kühleinrichtung der Drosselspule ist selbstverständlich in dem Kühlraum angeordnet. Dabei ist die Kühleinrichtung an einen Kühlkreislauf angeschlossen, der Kühlflüssigkeit zu den zu kühlenden Hochspannungsbauteilen führt.

Zweckmäßigerweise weist der Container an der Außenseite der Wandung von außen zugängliche Hochspannungsanschlüsse zum Anschluss der elektrischen Anlage an ein Übertragungs- oder Verteilnetz aus. Solche Hochspannungsanschlüsse werden vom Fachmann auch als Durchführungen bezeichnet, wobei diese in der Regel einen Hochspannungsleiter umfassen, der sich in Längsrichtung durch einen Isolator hindurch erstreckt. Abweichend davon gibt es auch viele als Steckverbindungen ausgebildete Durchführungen. Solche Steckverbindungen und Durchführungen sind dem Fachmann jedoch bekannt, so dass an dieser Stelle hierauf nicht detailliert eingegangen zu werden braucht.

Vorteilhafterweise weist der Container Anschlüsse für die Versorgung mit Kühlflüssigkeit auf. Die Anschlüsse für die Versorgung mit Kühlflüssigkeit sind zweckmäßigerweise am Kühlraum ausgebildet, wobei beispielsweise sowohl ein Eingangsanschluss als auch ein Ausgangsanschluss bereitgestellt sind. Darüber hinaus ist beispielsweise ein geschlossener Kühlkreislauf bereitgestellt. Im Kühlraum kommt es zur Abkühlung der Kühlflüssigkeit auf den gewünschten Temperaturbereich. Anschließend gelangt die abgekühlte Kühlflüssigkeit zu den zu kühlenden Hochspannungsbauteilen und sorgt während des Betriebs für die notwendige Betriebstemperatur dieser Bauteile. Anschließend wird die Kühlflüssigkeit entweder wieder zum Kühlraum mit der Kühleinrichtung geführt, so dass innerhalb des Containers ein geschlossener Kühlkreislauf bereitgestellt ist. Abweichend davon tritt die von dem Hochspannungsbauteil erwärmte Kühlflüssigkeit über den Ausgangsanschluss des Containers aus und gelangt über eine extern angeordnete Wärmetauscher und gegebenenfalls vorgesehene Filter wieder an den Eingangsanschluss des Containers.

In dem Container ist wenigstens ein Phasenmodul angeordnet, das eine Reihenschaltung von Submodulen aufweist. Gemäß dieser vorteilhaften Weiterentwicklung ist ein Phasenmodul für eine Phase eines anzuschließenden Versorgungsnetzes vorgesehen, wobei jedes Phasenmodul eine Reihenschaltung von Submodulen aufweist, deren Anzahl je nach anliegender Spannung des Versorgungsnetzes erweiterbar ist. Zweckmäßigerweise ist die Anzahl der in Reihe geschalteten Submodule so ausgelegt, dass an jedem Submodul die gewünschte Spannung abfällt.

Trotz der modularen Erweiterbarkeit der Phasenmodule bleibt jedoch die Ausgestaltung der Steuerung aufgrund der zentralen Anordnung der Steuerungselemente und der Verbindungskabel und Datenleitungen, die alle zu dem Steuerungsraum führen, übersichtlich, so dass eine einfache, schnelle und kostengünstige Montage der elektrischen Anlage ermöglicht und bereitgestellt ist.

Vorteilhafterweise weist jedes Submodul Anschlussklemmen, ein Energiespeicher und eine Leistungs-Halbleiterschaltung in Parallelschaltung zum Energiespeicher auf. Auf diese Art und Weise kann an den Anschlussklemmen der Submodule je nach Ansteuerung der Leistungshalbleiterschaltung und je nach Topologie der Leistungs-Halbleiterschaltung die Spannung Null oder die an dem Energiespeicher abfallende Spannung erzeugt werden.

Gemäß einer diesbezüglich zweckmäßigen Weiterentwicklung bilden die Leistungshalbleiterschaltung und der Energiespeicher eine Vollbrückenschaltung aus. Eine Vollbrückenschaltung ermöglicht das Einstellen der an dem Energiespeicher abfallenden Spannung an den Anschlussklemmen, eine Nullspannung oder das negative der Spannung, die an dem Energiespeicher abfällt. Somit sind drei Spannungszustände einstellbar.

Abweichend weist die Leistungs-Halbleiterschaltung zwei in Reihe zueinander angeordnete abschaltbare Leistungshalbleiter auf. Eine solche Leistungs-Halbleiterschaltung ist die so genannte Marquardt-Schaltung, die beispielsweise aus der deutschen Patentanmeldung DE101 03 031 A1 bekannt geworden ist. Eine solche Schaltung ermöglicht lediglich das Erzeugen einer Nullspannung an den Anschlussklemmen der Submodule und einer Kondensatorspannung, die der Energiespeicherspannung entspricht.

Vorteilhafterweise sind in dem Container ein aktives Filter, ein statischer Blindleistungskompensator oder ein Umrichter angeordnet.

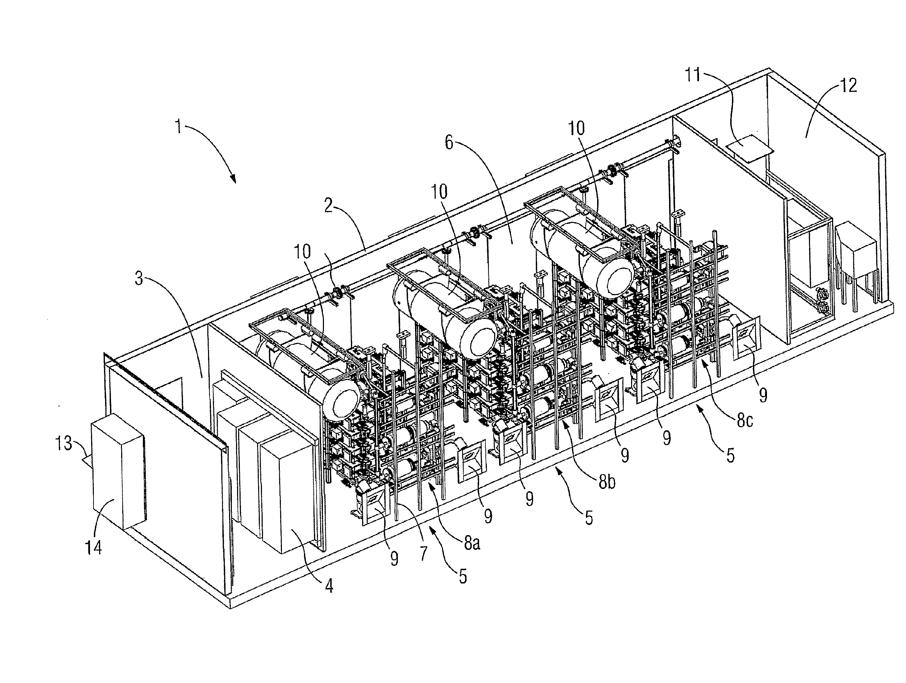

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei die
- Figur: ein Ausführungsbeispiel der erfindungsgemäßen elektrischen Anlage zeigt.

Die Figur zeigt ein Ausführungsbeispiel der erfindungsgemäßen elektrischen Anlage 1, die einen Container 2 umfasst, der in der Figur teilweise ohne Seiten- und Deckenwandung gezeigt ist. Der gezeigte Container 2 weist einen Bedienraum 3 auf, in dem Steuerungselemente 4 für Hochspannungsbauteile 5 angeordnet sind. Die Steuerungselemente 4 umfassen programmierbare Recheneinheiten, Regler, Schnittstellen und die dazugehörige Regelsoftware. Dabei sind Hochspannungsbauteile 5 in einem Hochspannungsraum 6 angeordnet, wobei ein Traggerüst 7 zur Halterung der Hochspannungsbauteile 5 vorgesehen ist.

Die Hochspannungsbauteile 5 umfassen drei Phasenmodule 8a, 8b und 8c, die jeweils mit einer Phase eines Drehspannungsnetzes als Versorgungsnetz verbunden sind. Zum Anschluss an das figürlich nicht dargestellte Versorgungsnetz sind Durchführungen 9 vorgesehen, die als Steckverbindungen ausgeführt und in der weggelassenen Seitenwandung des Containers 2 angeordnet sind.

Jedes Phasenmodul 8a, 8b oder 8c besteht aus einer Reihenschaltung von Submodulen, die zwei Anschlussklemmen aufweisen, wobei jedes Submodul eine Vollbrücke oder eine so genannte Marquardt-Schaltung umfasst, die über eine Leistungs-Halbleiterschaltung in Parallelschaltung zu einem Kondensator verfügt. Je nach Ansteuerung der Leistungs-Halbleiterschaltung kann an den Anschlussklemmen der Submodule somit die Spannung 0 oder die an dem Kondensator abfallende Spannung erzeugt werden, wobei die Polarität der Spannung im Falle einer Vollbrücke auch invertiert werden kann.

Die elektrische Anlage 1 gemäß der Figur dient als ein aktives Filter. Aus diesem Grunde werden die Leistungshalbleiter der Submodule der Phasenmodule 8a, 8b und 8c so geschaltet, dass harmonische Oberschwingungen im angeschlossenen figürlich nicht dargestellten Versorgungsnetz unterdrückt werden. Zur Filterung der beim Schalten der Leistungshalbleiter der Submodule entstehenden Störströme sind Filter vorgesehen, die Luftdrosseln 10 umfassen. Die Luftdrosseln 10 wärmen sich beim Betrieb der elektrischen Anlage 1 so stark, dass eine Luftkühlung nicht mehr ausreichend ist. Zur Kühlung der Luftdrosseln 10 ist daher eine Wasserkühlung vorgesehen, wobei ein geschlossener Kühlkreislauf bereitgestellt ist, der über eine Kühleinrichtung 11 verfügt. Die Kühleinrichtung 11 ist innerhalb eines Kühlraumes 12 angeordnet, der über eine nicht dargestellte Tür von außen verschließbar ist. Der Kühlraum 12 verfügt über eine Anschlussleitung, so dass die notwendige Kühlflüssigkeit, beispielsweise destilliertes Wasser von außen zugeführt werden kann.

Durch den Betrieb der elektrischen Anlage 1 entsteht insbesondere aufgrund der flüssiggekühlten Luftdrosseln 10 eine hohe Lärmbelastung. Aus diesem Grunde sind die Wandungen des Containers 2 doppelwandig ausgebildet, wobei eine Dämmschicht zwischen den Wandungen bereitgestellt ist. Eine hohe Lärmbelastung durch die elektrische Anlage ist daher vermieden. Zur Energieversorgung der Steuerungseinheiten dient ein Sekundärenergieanschluss 13, der über einen Sicherungskasten 14 mit den Steuerungseinheiten 4 verbunden ist.

Bei einem weiteren figürlich nicht dargestellten Ausführungsbeispiel, weist die in den Wandungen angeordnete Dämmschicht auch Wärme isolierende Eigenschaften auf. Darüber hinaus verfügt die Dämmschicht auch über die Eigenschaft, elektromagnetischen Strahlen am Durchgang durch die Wandungen des Containers 2 zu hindern. Die Dämmschicht besteht beispielsweise aus einer Komponente. Abweichend davon können alle, einige oder nur eine der aufgezählten Eigenschaften von mehreren Komponenten der Dämmschicht bereitgestellt sein. Die besagten Eigenschaften ermöglichen beispielsweise eine Aufstellung der elektrischen Anlage in bewohnten Gebieten.

## Patentansprüche

1. Elektrische Anlage (1) mit einem Container (2), der Hochspannungsbauteile (5) umschließt, wobei im Innenraum des Containers (2) ein Bedienraum (3) mit Steuer- und/oder Anzeigeelementen der elektrischen Anlage (1) und ein Kühlraum (12) mit einer Kühleinrichtung (11) für wenigstens eines der Hochspannungsbauteile angeordnet sind und wobei der Bedienraum (3) einen verschließbaren Zugang von außerhalb des Containers (2) aufweist, wobei in dem Container (2) wenigstens ein Phasenmodul (8a,8b,8c) angeordnet ist, das eine Reihenschaltung von Submodulen umfasst, jedes Submodul zwei Anschlussklemmen, einen Energiespeicher und eine Leistungshalbleiterschaltung in Parallelschaltung zum Energiespeicher aufweist, und die Leistungshalbleiterschaltung zwei in Reihe zueinander angeordnete abschaltbare Leistungsschalter aufweist, und wobei innerhalb des Containers (2) wenigstens eine Drosselspule (10) angeordnet ist und die Drosselspule (10) wassergekühlt ist.

2. Elektrische Anlage (1) nach Anspruch 1,
**dadurch gekennzeichnet, dass**
der Kühlraum (12) einen verschließbaren Zugang von außerhalb des Containers (2) aufweist.

3. Elektrische Anlage (1) nach Anspruch 1,
**gekennzeichnet durch**
einen Hochspannungsraum (6) innerhalb des Containers (2), der die Hochspannungsbauteile (5) enthält.

4. Elektrische Anlage (1) nach Anspruch 3,
**dadurch gekennzeichnet, dass**
der Hochspannungsraum (6) wenigstens einen verschließbaren Zugang von außerhalb des Containers (2) aufweist.

5. Elektrische Anlage (1) nach einem der Ansprüche 1 bis 4,
**dadurch gekennzeichnet, dass**
die Wandung des Containers (2) wenigstens teilweise schallgedämmt ist.

6. Elektrische Anlage (1) nach einem der vorhergehenden Ansprüche,
**dadurch gekennzeichnet, dass**
die Wandung zumindest teilweise über eine Wärmeisolierung und/oder über eine Isolierung gegenüber elektromagnetischer Strahlung verfügt.

7. Elektrische Anlage (1) nach Anspruch 5 oder 6,
**dadurch gekennzeichnet, dass**
die Wandung wenigstens teilweise doppelwandig ausgebildet ist.

8. Elektrische Anlage (1) nach Anspruch 5, 6 oder 7,
**dadurch gekennzeichnet, dass**
die Wandung wenigstens in Teilbereichen eine Schalldämmschicht aufweist.

9. Elektrische Anlage (1) nach einem der Ansprüche 1 bis 8,
**dadurch gekennzeichnet, dass**
der Container (2) an der Außenseite der Wandung von außen zugängliche Hochspannungsanschlüsse (9) zum Anschluss der elektrischen Anlage an ein Übertragungs- oder Verteilnetz aufweist.

10. Elektrische Anlage (1) nach Anspruch 9,
**dadurch gekennzeichnet, dass**
die Hochspannungsanschlüsse (9) als Teil einer Steckverbindung ausgebildet sind.

11. Elektrische Anlage (1) nach einem der vorhergehenden Ansprüche,
**dadurch gekennzeichnet, dass**
der Container (2) Anschlüsse für die Versorgung mit Kühlflüssigkeit aufweist.

12. Elektrische Anlage (1) nach einem der vorhergehenden Ansprüche,
**dadurch gekennzeichnet, dass**
die Leistungshalbleiterschaltung und der Energiespeicher eine Vollbrückenschaltung ausbilden.

13. Elektrische Anlage (18) nach einem der vorhergehenden Ansprüche,
**dadurch gekennzeichnet, dass**
in dem Container ein aktives Filter, ein statischer Blindleistungskompensator oder ein Umrichter angeordnet ist.

## Claims

1. Electrical installation (1) having a container (2) which encloses high-voltage components (5), wherein the interior of the container (2) contains a control room (3) having control and/or display elements for the electrical installation (1) and a cooling room (12) having a cooling device (11) for at least one of the high-voltage components and wherein the control room (3) has a lockable access from outside the container (2), wherein the container (2) contains at least one phase module (8a, 8b, 8c) which comprises a series circuit of submodules, each submodule has two connecting terminals, an energy store and a power semiconductor circuit connected in parallel with the energy store, and the power semiconductor circuit has two power switches arranged in series with one another that can be switched off, and wherein the container (2) contains at least one inductor (10) and the inductor (10) is water-cooled.

2. Electrical installation (1) according to Claim 1,
**characterized in that**
the cooling room (12) has a lockable access from outside the container (2).

3. Electrical installation (1) according to Claim 1,
**characterized by**
a high-voltage room (6) inside the container (2) which contains the high-voltage components (5).

4. Electrical installation (1) according to Claim 3,
**characterized in that**
the high-voltage room (6) has at least one lockable access from outside the container (2).

5. Electrical installation (1) according to one of Claims 1 to 4,
**characterized in that**
the wall of the container (2) is at least partially soundproofed.

6. Electrical installation (1) according to one of the preceding claims,
**characterized in that**
the wall at least partially has thermal insulation and/or insulation from electromagnetic radiation.

7. Electrical installation (1) according to Claim 5 or 6,
**characterized in that**
the wall is at least partially in double-wall form.

8. Electrical installation (1) according to Claim 5, 6 or 7,
**characterized in that**
the wall has a soundproofing layer at least in subregions.

9. Electrical installation (1) according to one of Claims 1 to 8,
**characterized in that**
the container (2) has, on the outside of the wall, externally accessible high-voltage connections (9) for connecting the electrical installation to a transmission or distribution network.

10. Electrical installation (1) according to Claim 9,
**characterized in that**
the high-voltage connections (9) are in the form of part of a plug connection.

11. Electrical installation (1) according to one of the preceding claims,
**characterized in that**
the container (2) has connections for the supply of cooling fluid.

12. Electrical installation (1) according to one of the preceding claims,
**characterized in that**
the power semiconductor circuit and the energy store form a full-bridge circuit.

13. Electrical installation (18) according to one of the preceding claims,
**characterized in that**
the container contains an active filter, a static VAR compensator or a converter.

## Revendications

1. Installation ( 1 ) électrique ayant un contenant ( 2 ), qui enferme des composants ( 5 ) de haute tension, une chambre ( 3 ) de service ayant des éléments de commande et/ou d'affichage de l'installation ( 1 ) électrique et une chambre ( 12 ) de refroidissement, ayant un dispositif ( 11 ) de refroidissement d'au moins l'un des composants de haute tension, étant disposées à l'intérieur du contenant ( 2 ) et la chambre ( 3 ) de service ayant un accès pouvant être fermé de l'extérieur du contenant ( 2 ), dans laquelle, dans le contenant ( 2 ), est disposé au moins un module ( 8a, 8b, 8c ) de phase, qui comprend un circuit série de sous-modules, chaque sous-module a deux bornes de connexion, un accumulateur d'énergie et un circuit de disjoncteur en parallèle à l'accumulateur d'énergie et le circuit de disjoncteur a deux disjoncteurs en série l'un par rapport à l'autre pouvant disjoncter et dans laquelle il est disposé, à l'intérieur du contenant ( 2 ), au moins une bobine ( 10 ) de self et la bobine ( 10 ) de self est refroidie à l'eau.

2. Installation ( 1 ) électrique suivant la revendication 1,
**caractérisée en ce que**
la chambre ( 12 ) de refroidissement a un accès pouvant être fermé de l'extérieur du contenant ( 2 ).

3. Installation ( 1 ) électrique suivant la revendication 1,
**caractérisée par**
à l'intérieur du contenant ( 2 ), une chambre ( 6 ) de haute tension, qui contient les composants ( 5 ) de haute tension.

4. Installation ( 1 ) électrique suivant la revendication 3,
**caractérisée en ce que**
la chambre ( 6 ) de haute tension a au moins un accès pouvant être fermé de l'extérieur du contenant ( 2 ).

5. Installation ( 1 ) électrique suivant l'une des revendications 1 à 4,
**caractérisée en ce que**
la paroi du contenant ( 2 ) est insonorisée au moins en partie.

6. Installation ( 1 ) électrique suivant l'une des revendications précédentes,
**caractérisée en ce que**
la paroi dispose, au moins en partie, d'un calorifugeage et/ou d'une isolation vis-à-vis du rayonnement électromagnétique.

7. Installation ( 1 ) électrique suivant la revendication 5 ou 6,
**caractérisée en ce que**
la paroi est, au moins en partie, à double paroi.

8. Installation ( 1 ) électrique suivant la revendication 5, 6 ou 7,
**caractérisée en ce que**
la paroi a, au moins dans certaines parties, une couche d'insonorisation.

9. Installation ( 1 ) électrique suivant l'une des revendications 1 à 8,
**caractérisée en ce que**
le contenant ( 2 ) a, du côté extérieur de la paroi, des bornes ( 9 ) de haute tension accessibles à l'extérieur pour le raccordement de l'installation électrique à un réseau de transmission ou de distribution.

10. Installation ( 1 ) électrique suivant la revendication 9,
**caractérisée en ce que**
les bornes ( 9 ) de haute tension forment une partie d'une connexion à enfichage.

11. Installation ( 1 ) électrique suivant l'une des revendications précédentes,
**caractérisée en ce que**
le contenant ( 2 ) a des raccords d'alimentation en du liquide de refroidissement.

12. Installation ( 1 ) électrique suivant l'une des revendications précédentes,
**caractérisée en ce que**
le circuit de disjoncteur et l'accumulateur d'énergie forment un circuit en pont complet.

13. Installation ( 1 ) électrique suivant l'une des revendications précédentes,
**caractérisée en ce que**
un filtre actif, un compensateur statique de puissance réactive ou un convertisseur est disposé dans le contenant.
